# EUROPÄISCHE PATENTSCHRIFT

(11) **EP 2 685 060 B1**
(45) Veröffentlichungstag und Bekanntmachung des Hinweises auf die Patenterteilung: **08.07.2015**
(21) Anmeldenummer: 13002241.1
(22) Anmeldetag: 26.04.2013
(51) Int. Cl.: F01N 3/20

(54) **Reduktionsmitteldosiersystem mit Entleerung der Reduktionsmittelleitung nach Beendigung der Dosierung**
Reductant metering system with emptying of the reductant line after the end of metering
Système de dosage d'agent de réduction avec vidange de la conduite d'agent de réduction après la fin du dosage

(30) Priorität: 09.07.2012 DE 102012013468
(43) Veröffentlichungstag der Anmeldung: 15.01.2014
(73) Patentinhaber: Albonair GmbH, 44263 Dortmund (DE)
(72) Erfinder: Leichinger, Denis, 58708 Menden (DE); Overhoff, Dipl. Ing.Werner, 45772 Marl (DE); Schaika, Dipl. Ing.(FH) MSC Volker, 44137 Dortmund (DE)
(74) Vertreter: Patentanwaltskanzlei Methling

(56) Entgegenhaltungen:
- WO-A1-2008/017673
- WO-A1-2010/115487
- DE-A1- 10 359 522

## Beschreibung

Die Erfindung betrifft ein Reduktionsmitteldosiersystem zur Einspritzung eines Reduktionsmittels in den Abgasstrom eines Verbrennungsmotors zur selektiven katalytischen Reduktion, wobei das Dosiersystem mit einem Reduktionsmitteltank verbindbar/verbunden ist, aus dem Reduktionsmittel entnommen und mittels einer Förderpumpe über eine Förderleitung gefördert und über zumindest eine Düse in den Abgasstrom des Verbrennungsmotors eingeleitet wird.

Ferner betrifft die Erfindung ein Verfahren zum Betrieb eines Reduktionsmitteldosiersystems zur Einspritzung eines Reduktionsmittels in den Abgasstrom eines Verbrennungsmotors zur selektiven katalytischen Reduktion, wobei das Dosiersystem mit einem Reduktionsmitteltank verbunden ist, aus dem Reduktionsmittel entnommen und mittels einer Förderpumpe über eine Förderleitung gefördert und über zumindest eine Düse in den Abgasstrom des Verbrennungsmotors eingeleitet wird.

Katalysatoren zur selektiven katalytischen Reduktion, sogenannte SCR-Katalysatoren (englisch: selective catalyic reduction, abgekürzt: SCR) werden eingesetzt, um die Stickoxydemission von Dieselmotoren, Feuerungsanlagen, Müllverbrennungsanlagen, Industrieanlagen und dergleichen zu vermindern. Hierzu wird ein Reduktionsmittel in das Abgassystem mit einer Dosiervorrichtung eingedüst. Als Reduktionsmittel dient Ammoniak oder eine Ammoniaklösung oder ein anderes Reduktionsmittel.

Da das Mitführen von Ammoniak in Fahrzeugen sicherheitskritisch ist, wird Harnstoff in wässriger Lösung mit üblicherweise 32,5 % Harnstoffanteil gemäß DIN 70070, das sogenannte AdBlue, eingesetzt. Im Abgas zersetzt sich der Harnstoff bei Temperaturen oberhalb von 150° Celsius in gasförmiges Ammoniak und CO₂. Parameter für die Zersetzung des Harnstoffes sind im wesentlichen Zeit (Verdampfungs- und Reaktionszeit), Temperatur und Tröpfchengröße der eingedüsten Harnstofflösung. In diesen SCR-Katalysatoren wird durch selektive katalytische Reduktion (englisch selective catalyic reduction, SCR) der Ausstoß von Stickoxyden um etwa 90 % reduziert.

Dadurch, dass die üblicherweise eingesetzte 32,5%ige Harnstofflösung bei etwa -11°C gefriert und sich um etwa 10% ausdehnt, können infolge der Ausdehnung der wässrigen Lösung bzw. des Wasseranteils der Lösung Komponenten des Dosiersystems beschädigt werden. Die Problematik des Einfrierens betrifft auch jede andere wässrige Reduktionsmittellösung als die häufig als Reduktionsmittel eingesetzte 32,5%ige Harnstofflösung. Aufgrund des hohen Wasseranteils in der wässrigen Reduktionsmittellösung können somit aufgrund der Anomalie des Wassers bei tiefen Temperaturen Frostschäden auftreten.

Um Beschädigungen von Komponenten des Dosiersystems durch die Ausdehnung infolge eines Einfrierens der Reduktionsmittellösung zu vermeiden, sind die Reduktionsmittel führenden Komponenten in Dosierpausen und insbesondere nach Beendigung der Dosierung von der Reduktionsmittellösung zu befreien.

Ein weiteres Problem besteht darin, dass die Reduktionsmittellösung kristallisieren könnte. Nach Beendigung der Reduktionsmitteleinspritzung muss die Düse daher von Rückständen der Reduktionsmittellösung befreit werden, um zu verhindern, dass diese kristallisieren und die Austrittsöffnung der Düse verstopfen.

Aus der DE 10 2008 013 960 A1 ist es bekannt, mittels Druckluft die Reduktionsmittel führenden Komponenten nach Beendigung der Dosierung zu reinigen. Nachteilig ist dabei, dass diese Vorgehensweise die Aufrechterhaltung eines bestimmten Mindestdruckes in einem Druckluftsystem für eine gewisse Zeitspanne nach Beendigung der Dosierung erfordert und beispielsweise bei einem Ausfall der elektrischen Versorgung des Dosiersystems nicht ausfallsicher ist.

Ein weiterer Nachteil bei dieser Lösung besteht darin, dass eine Druckluftleitung ausschließlich zum Ausblasen der Reduktionsmittelförderleitung und der Düse vorgesehen werden muss, wodurch sich der anlagentechnische Aufwand erhöht und die Restmenge an Reduktionsmittel ungenutzt in den Abgasstrang eingespritzt wird.

Die Aufgabe der Erfindung ist es, ein Reduktionsmitteldosiersystem der eingangs genannten Art derart weiter zu bilden, dass eine Entleerung der Reduktionsmittelförderleitung und der Düse in Dosierpausen und nach Beendigung der Dosierung bei reduziertem Anlagenaufwand ermöglicht wird, sodass diese Komponenten zuverlässig von Rückständen der Reduktionsmittellösung befreit werden, um Frostschäden und Verstopfungen zu verhindern, ohne dass eine gesonderte Druckluftversorgung zur Belüftung der Reduktionsmittelförderleitung und der Düse vorgesehen werden muss. Eine weitere Aufgabe der Erfindung ist es, ein Verfahren zum Betrieb eines Reduktionsmitteldosiersystems anzugeben, welches eine Entleerung der Reduktionsmittelförderleitung und der Düse in Dosierpausen und nach Beendigung der Dosierung bei reduziertem Anlagenaufwand ermöglicht, ohne dass ein Ausblasen der Reduktionsmittelförderleitung und der Düse mittels Druckluft durchgeführt werden muss.

Diese Aufgabe wird erfindungsgemäß durch ein Reduktionsmitteldosiersystem gemäß Anspruch 1 und durch ein Verfahren zum Betrieb eines Reduktionsmitteldosiersystems gemäß Anspruch 10 gelöst. Vorteilhafte Weiterbildungen der Erfindung sind in den jeweiligen abhängigen Ansprüchen angegeben.

Besonders vorteilhaft bei dem Reduktionsmitteldosiersystem zur Einspritzung eines Reduktionsmittels in den Abgasstrom eines Verbrennungsmotors zur selektiven katalytischen Reduktion, wobei das Dosiersystem mit einem Reduktionsmitteltank verbindbar/verbunden ist, aus dem Reduktionsmittel entnommen und mittels einer Förderpumpe über eine Förderleitung gefördert und über zumindest eine Düse in den Abgasstrom des Verbrennungsmotors eingeleitet wird, ist es, dass in die Förderleitung ein Venturirohr integriert ist, welches einen Abzweig aufweist, der in die Düse mündet, wobei am Austritt des Venturirohres ein öffenbares Absperrorgan angeordnet ist, sodass bei geöffnetem Absperrorgan das in der Düse und dem Abzweig befindliche Reduktionsmittel als Saugmedium in das Venturirohr angesaugt und über den Austritt abtransportiert wird.

Besonders vorteilhaft bei dem Verfahren zum Betrieb eines Reduktionsmitteldosiersystems zur Einspritzung eines Reduktionsmittels in den Abgasstrom eines Verbrennungsmotors zur selektiven katalytischen Reduktion, wobei das Dosiersystem mit einem Reduktionsmitteltank verbunden ist, aus dem Reduktionsmittel entnommen und mittels einer Förderpumpe über eine Förderleitung gefördert und über zumindest eine Düse in den Abgasstrom des Verbrennungsmotors eingeleitet wird, ist es, dass in die Förderleitung ein Venturirohr integriert ist, welches einen Abzweig aufweist, der in die Düse mündet, wobei am Austritt des Venturirohres ein öffenbares Absperrorgan angeordnet ist, welches während des Dosierbetriebes geschlossen ist und bei Beendigung der Dosierung geöffnet wird, sodass bei geöffnetem Absperrorgan das in der Düse und dem Abzweig befindliche Reduktionsmittel als Saugmedium in das Venturirohr angesaugt und über den Austritt abtransportiert wird.

Die Begriffe Reduktionsmitteldosiersystem bzw. Dosiersystem werden im Sinne dieser Beschreibung synonym verwendet. Mit dem Begriff der Reduktionsmittellösung oder des Reduktionsmittels ist jedes zur selektiven katalytischen Reduktion geeignete Reduktionsmittel umfasst, vorzugsweise kommt hierzu eine Harnstofflösung gemäß DIN 70070 zum Einsatz. Die Erfindung ist jedoch nicht hierauf beschränkt.

In einer bevorzugten Gesamtanordnung weist das Reduktionsmitteldosiersystem einen Tank auf, in den die Reduktionsmittellösung eingefüllt wird und aus dem die Reduktionsmittellösung entnommen und mittels einer Dosierpumpe gefördert und über zumindest eine Düse in den Abgasstrom des Verbrennungsmotors eingeleitet wird.

Im Dosierbetrieb, d.h. während der Dosierung und Einspritzung des Reduktionsmittels in den Abgastrakt, ist das Absperrorgan am Austritt des Venturirohres geschlossen, sodass das Reduktionsmittel über den Abzweig zur Düse gefördert wird. Nach Beendigung der Dosierung wird das Absperrorgan am Austritt des Venturirohres geöffnet, sodass der Förderstrom des Reduktionsmittels vom Eintritt in das Venturirohr geradeaus zum Austritt des Venturirohrs strömt und aufgrund der Beschleunigung der Strömung in dem Venturirohr ein Absinken des statischen Drucks erfolgt, wodurch durch den sogenannten Venturieffekt nach dem Wirkprinzip der Strahlpumpe das in der Abzweigleitung zur Düse befindliche Reduktionsmittel angesaugt und mit dem Hauptstrom über den Austritt des Venturirohres abtransportiert wird. Hierdurch kann die Förderleitung und die Düse vollständig entleert werden. Der Austritt des Venturirohres kann mit dem Tank verbunden sein, sodass die aus der Abzweigleitung zurück gesaugte Menge zurück in den Tank gefördert werden kann.

Hierdurch werden sowohl Frostschäden als auch Verstopfungen durch Kristallbildung zuverlässig verhindert. Durch die Anordnung des Venturirohres zwischen Dosierpumpe und der Austrittsöffnung der Düse und der Schaltung des Absperrorgans am Austritt des Venturirohres wird der Förderstrom des Reduktionsmittels während des Dosierbetriebs ausschließlich über die Abzweigleitung zur Düse gefördert und bei Beendigung oder Unterbrechung des Dosierbetriebs nach Öffnung des am Austritt des Venturirohres vorgesehenen Absperrorgans durch den Betrieb des Venturirohres als Strahlpumpe aus der Düse und der Abzweigleitung zurück in das Venturirohr angesaugt und abtransportiert. Hierdurch wird die Düse samt Düsenöffnung und die stromauf angeordnete Förderleitung nach Beendigung der Reduktionsmitteleinspritzung entleert, die anderenfalls einfrieren oder auskristallisieren und die Düse verstopfen könnten.

Kern der Erfindung ist somit die Anordnung eines absperrbaren Venturirohres in der Förderleitung auf der Druckseite der Förderpumpe, welches während des Betriebes als schlichter Bogen zur Abzweigleitung zur Düse hin eingesetzt wird und bei Beendigung oder Unterbrechung des Dosierbetriebes als Strahlpumpe zur Entleerung der Abzweigleitung und der Düse eingesetzt wird. Durch die Erfindung wird ein einfaches System geschaffen, mit dem es möglich ist, die Flüssigkeit in der Düse und in der Zuleitung zur Düse nach Beendigung der Dosierung abzusaugen. Dabei wird das Prinzip der Saugstrahlpumpe genutzt, d.h. der durch eine Beschleunigung der Förderflüssigkeit in dem Venturirohr entstehende Unterdruck sorgt für das Ansaugen der Flüssigkeit aus der Düse und der Zuleitung zur Düse.

Die Anordnung einer Verbindung zwischen einem Druckluftsystem und der Reduktionsmittelförderleitung ist somit nicht mehr erforderlich, wodurch die Zuverlässigkeit des Reduktionsmitteldosiersystems erhöht und der anlagentechnische Aufwand reduziert wird.

Vorzugsweise ist der Abzweig im Bereich einer Verjüngung des Venturirohres angeordnet. Aufgrund einer solchen Verjüngung des Venturirohres wird die Strömung in dem Venturirohr beschleunigt. Aufgrund der Beschleunigung der Strömung und des damit verbundenen Anstiegs des dynamischen Druckes sinkt der statische Druck in der geförderten Flüssigkeit im Bereich der Verjüngung ab. Durch diesen abgesenkten statischen Druck kann bei Öffnen des am Austritt des Venturirohres vorgesehenen Absperrorgans die in der Abzweigleitung und der Düse befindliche Flüssigkeit angesaugt werden, so dass die Abzweigleitung und die Düse entleert werden.

In einer besonders bevorzugten Ausführungsform ist der Abzweig halb in oder unmittelbar vor einer Querschnittserweitung des Venturirohres angeordnet. Alternativ kann der Abzweig beabstandet stromauf vor einer Querschnittserweitung des Venturirohres angeordnet sein.

Durch eine derartige Querschnittserweiterung stromab des Abzweiges kann die Strömung wieder auf jene vor dem Venturirohr herrschenden Strömungszustände hinsichtlich des Druckes in dem Fluid sowie hinsichtlich der Strömungsgeschwindigkeit zurückgeführt werden.

Bei einer besonders bevorzugten Ausführungsform ist der Abzweig im Bereich einer in das Venturirohr mündenden Treibdüse der Förderleitung angeordnet. In diesem Fall kann das Venturirohr ausgestaltet sein wie eine Strahlpumpe, indem eine Treibdüse der Förderleitung in eine Kammer mündet, wobei in dieselbe Kammer der Abzweig zur Düse mündet. Stromab des Abzweigs kann dann eine Querschnittsverengung gefolgt von einem Diffusor bis zum Austritt des Venturirohres angeordnet sein. Eine solche Ausgestaltung entspricht dann dem typischen Aufbau einer Strahlpumpe.

Der Abzweig zur Düse kann senkrecht auf dem Venturirohr stehen oder aber einen spitzen Winkel mit dem Venturirohr einschließen. Der spitze Winkel kann derart ausgebildet und der Abzweig derartig auf dem Venturirohr angeordnet sein, dass die Strömungsrichtung von der Einströmung in das Venturirohr und der Abströmung aus dem Abzweig zur Düse hin um bis zu 135°, insbesondere um bis zu 150° umgelenkt wird. Sofern der Abzweig senkrecht auf dem Venturirohr steht, wird die Strömung bei geschlossenem Absperrorgan am Austritt des Venturirohres um 90° umgelenkt, so dass die gesamte Baueinheit in diesem Fall wie ein schlichter Rohrbogen eingesetzt wird.

Es hat sich jedoch gezeigt, dass die Anordnung des Abzweiges dergestalt auf dem Venturirohr, dass zwischen dem Zuströmbereich und dem Abzweig ein spitzer Winkel eingeschlossen wird, dergestalt, dass die Strömung während des Dosierbetriebes um 135° oder um bis zu 150° umgelenkt wird, besonders vorteilhaft ist und das Entleeren der Abzweigleitung und der Düse bei Öffnung des am Austritt des Venturirohres vorgesehenen Absperrorgans sehr schnell und effektiv erfolgen kann.

Der Innendurchmesser des Venturirohres kann im Bereich des Abzweiges gleich oder kleiner als 5 mm, insbesondere gleich oder kleiner als 4 mm, insbesondere gleich oder kleiner als 3 mm, insbesondere gleich oder kleiner als 2 mm, insbesondere gleich oder kleiner als 1 mm, insbesondere gleich oder kleiner als 0,8 mm ist.

Alternativ oder kumulativ kann der Innendurchmesser des Abzweiges ebenfalls gleich oder kleiner als 5 mm, insbesondere gleich oder kleiner als 4 mm, insbesondere gleich oder kleiner als 3 mm, insbesondere gleich oder kleiner als 2 mm, insbesondere gleich oder kleiner als 1 mm, insbesondere gleich oder kleiner als 0,8 mm ist.

In einer bevorzugten Ausführungsform des Reduktionsmitteldosiersystems ist eine Druckluftversorgung vorgesehen, wobei das Reduktionsmittel innerhalb oder außerhalb der Düse mittels Druckluft zerstäubt wird. Zur Zerstäubung des Reduktionsmittels kann eine Mischkammer vorgesehen sein, innerhalb derer eine Zerstäubung des Reduktionsmittels mittels der Druckluft bereits vor der Einleitung in den Abgastrakt erfolgt. In einer bevorzugten Ausführungsform ist jedoch die Düse als außenmischende Zweistoffdüse ausgebildet, bei der aus einer ersten Düsenöffnung die Reduktionsmittellösung austritt und aus einer zweiten Düsenöffnung Druckluft austritt, wobei die beiden Düsenöffnungen derart zueinander ausgerichtet sind, dass die Druckluft das Reduktionsmittel außerhalb der Düse zerstäubt, so dass die Düse als außenmischende Zweistoffdüse ausgebildet ist und die Aerosolbildung außerhalb der Düse erfolgt.

Vorzugsweise ist eine Druckluftversorgung vorgesehen, die ein Schaltventil und/oder ein Druckregelventil aufweist. Dieses Schaltventil dient der Steuerung, d. h. der Ein- und Abschaltung der Druckluftversorgung.

Alternativ oder kumulativ kann die Druckluftversorgung ein Druckregelventil aufweisen. Hierdurch kann die Druckluft auf ein zur Zerstäubung des Reduktionsmittels mittels Druckluft gewünschtes Druckniveau eingestellt werden. Die Druckluft selbst kann aus einem bordeigenen Druckluftsystem, beispielsweise eines Nutzfahrzeuges, in dessen Abgastrakt das Dosiersystem angeordnet ist, entnommen werden, ohne dass der in dem Druckluftsystem vorherrschende Systemdruck eine Einschränkung darstellt, da der Druck der Druckluft auf den gewünschten Druck abgesenkt werden kann.

Bei der Dosierpumpe kann es sich insbesondere um eine Membranpumpe oder eine Kolbenpumpe oder eine Kreiselpumpe oder eine Orbitalpumpe oder eine Zahnradpumpe handeln.

Eine als Dosierpumpe dienende Membranpumpe kann dabei beispielsweise mit einer Frequenz von bis zu 50 Hz oder bis zu 100 Hz angesteuert werden. Das Ansteuerungssignal der Membranpumpe kann dabei pulsweitenmoduliert sein.

Durch eine derartige Pulsweitenmodulation des Ansteuerungssignals der Membranpumpe kann die Dosiergenauigkeit und das Geräuschverhalten verbessert werden. Insbesondere hat sich gezeigt, dass die Dosiergenauigkeit durch die Ansteuerung einer Membranpumpe mit einem pulsweitenmodulierten Signal deutlich verbessert werden kann. Durch eine Pulsweitenmodulation des Ansteuerungssignals der Membranpumpe kann die momentane Förderleistung der Membranpumpe dem jeweiligen Betriebszustand des Verbrennungsmotors sowie der Temperatur und dem Massenstrom des Abgases angepasst werden, sodass die Dosierung des Reduktionsmittels exakt bedarfsorientiert erfolgen kann.

Mehrere Ausführungsbeispiele der Erfindung sind in den Figuren dargestellt und werden nachfolgend näher erläutert. Es zeigen:
- Fig. 1: Eine erste Ausführungsform eines in die Förderleitung integrierten Venturirohres mit dem Abzweig zur Düse;
- Fig. 2: eine zweite Ausführungsform eines in die Förderleitung integrierten Venturirohres mit dem Abzweig zur Düse;
- Fig. 3: eine dritte Ausführungsform eines in die Förderleitung integrierten Venturirohres mit dem Abzweig zur Düse;
- Fig. 4: eine vierte Ausführungsform eines in die Förderleitung integrierten Venturirohres mit dem Abzweig zur Düse.

Identische Bauteile, Komponenten und Baugruppen sind in den Figuren jeweils mit identischen Bezugszeichen gekennzeichnet.

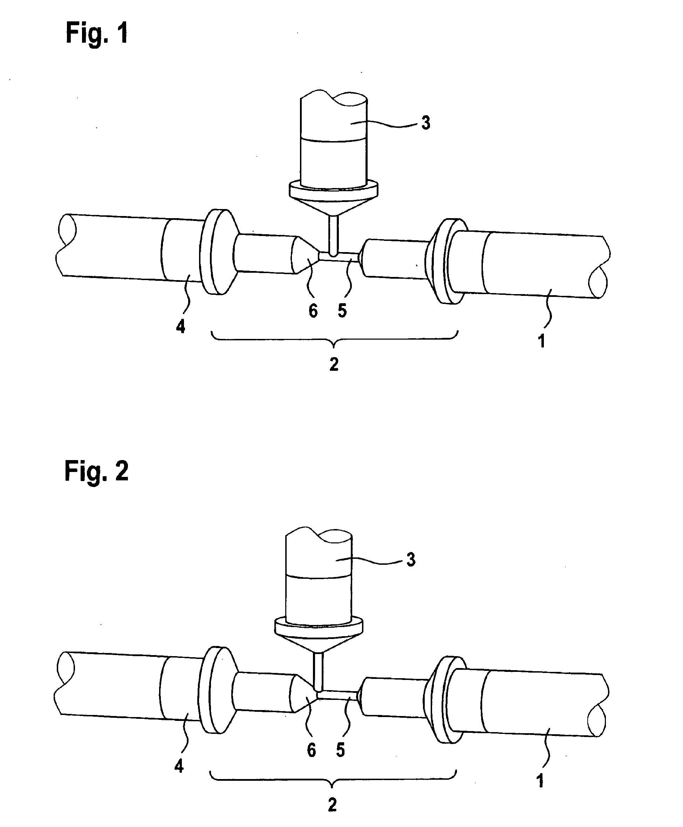

In den Fig. 1 bis 4 ist jeweils dargestellt ein Ausschnitt aus der Förderleitung 1 eines Reduktionsmitteldosiersystems zur Einspritzung eines Reduktionsmittels in den Abgasstrom eines Verbrennungsmotors zur selektiven katalytischen Reduktion. Das Dosiersystem ist mit einem Reduktionsmitteltank verbunden, aus dem Reduktionsmittel entnommen und mittels einer nicht dargestellten Förderpumpe über die Förderleitung 1 gefördert wird.

In die Förderleitung 1 ist integriert ein Venturirohr 2, welches bei den in den Fig. 1 bis 3 dargestellten Ausführungsbeispielen eine Verjüngung 5 aufweist und ferner im Bereich der Verjüngung 5 einen Abzweig 3. Der Abzweig 3 erweitert sich zu einem Leitungsdurchmesser entsprechend der Förderleitung 1 und mündet in die nicht dargestellte Düse, über die das Reduktionsmittel in den Abgastrakt des Verbrennungsmotors eingespritzt wird.

Wie den Fig. 1 bis 3 zu entnehmen ist, folgt stromab des Abzweiges 3 eine Querschnittserweiterung 6 des Venturirohres. Am Austritt 4 des Venturirohres ist ein schaltbares Absperrorgan angeordnet, mittels dessen der Austritt 4 des Venturirohres verschließbar ist.

Während des Dosierbetriebes des Dosiersystems ist das Absperrorgan am Austritt 4 des Venturirohres 2 geschlossen, so dass das über die Förderleitung 1 geförderte Reduktionsmittel über den Abzweig 3 zur Düse gefördert und in den Abgastrakt des Verbrennungsmotors eingespritzt wird.

Bei Beendigung der Dosierung wird das Absperrorgan am Austritt 4 des Venturirohres 2 geöffnet, so dass das durch die Förderleitung 1 geförderte Reduktionsmittel über den Austritt 4 des Venturirohres 2 abströmt. Aufgrund der Verengung 5 innerhalb des Venturirohres 2 wird die geförderte Flüssigkeit beschleunigt, d.h. der dynamische Druck steigt stark an. Infolge dessen sinkt der statische Druck stark ab, da der Totaldruck konstant ist. Aufgrund des sich ergebenden Venturieffektes innerhalb des Venturirohres 2 wird hierdurch das in der Düse und in der Abzweigleitung 3 zur Düse hin befindliche Fluid angesaugt und durch die Hauptströmung der Verjüngung 5 des Venturirohres 2 mitgerissen und über den Austritt 4 abtransportiert.

Bei der Ausführungsform gemäß Fig. 1 ist der Abzweig 3 im Bereich der Verjüngung 5 beabstandet zu einer stromab folgenden Querschnittserweiterung 6 des Venturirohres 2 angeordnet. Dabei steht der Abzweig 3 senkrecht auf dem Venturirohr 2.

Bei der in Fig. 2 dargestellten Variante steht der Abzweig 3 ebenfalls senkrecht auf dem Venturirohr 2 und ist ebenfalls im Bereich der Verjüngung 5 des Venturirohres 2 angeordnet. Bei der Ausführungsform gemäß Fig. 2 ist der Abzweig 3 jedoch nicht beabstandet stromauf vor einer Querschnittserweiterung 6 des Venturirohres 2 angeordnet, sondern ist, wie Fig. 2 zu entnehmen ist, halb in der Querschnittserweiterung 6 des Venturirohres 2 angeordnet.

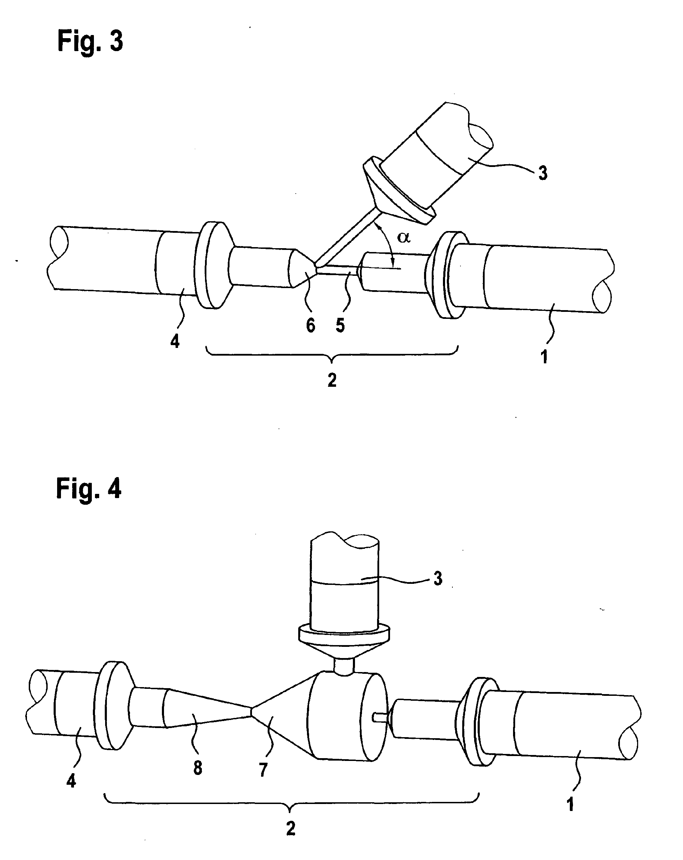

Bei der in Fig. 3 dargestellten Ausführungsform der Erfindung ist der Abzweig 3 schräg auf dem Venturirohr 2 angeordnet, so dass ein spitzer Winkel α zwischen dem Abzweig 3 und dem Venturirohr 2 eingeschlossen wird. Dies bedeutet, dass bei geschlossenem Absperrorgan am Austritt 4 des Venturirohres 2 die Strömung in diesem Fall um 135° in den Abzweig 3 zur nicht dargestellten Düse hin umgelenkt wird. Es hat sich gezeigt, dass diese Anordnung mit einem spitzen Winkel α zwischen dem Abzweig 3 und dem Venturirohr 2 besonders zur Entleerung der Abzweigleitung 3 und der Düse effektiv ist, wenn das Absperrorgan am Austritt 4 des Venturirohres 2 bei Beendigung der Dosierung geöffnet wird.

Bei der Ausführungsform gemäß Fig. 3 ist der Abzweig 3 im Bereich der Verjüngung 5 des Venturirohres 2 halb in einer Querschnittserweiterung 6 angeordnet.

Bei den Ausführungsformen gemäß den Fig. 1 bis 3 weist die Verjüngung 5 des Venturirohres 2 einen Innendurchmesser von 1 mm auf. Die Abzweigleitung kann ebenfalls einen Innendurchmesser von 1 mm oder auch einen kleineren Durchmesser als die Verjüngung 5 des Venturirohres 2 aufweisen, wobei sich die Abzweigleitung 3 in Richtung auf die Düse sodann auf einen Leitungsdurchmesser entsprechend der Förderleitung 1 erweitert. Es hat sich jedoch gezeigt, dass ein Entleeren der Abzweigleitung 3 und der Düse besonders effektiv erfolgen kann, wenn die Abzweigleitung 3 im Anschlussbereich an das Venturirohr 2 einen etwas kleineren Durchmesser aufweist, als die Verjüngung 5 des Venturirohres 2.

In Fig. 4 ist eine weitere Ausführungsform der Erfindung dargestellt. Dabei ist in die Förderleitung 1 ein Venturirohr 2 integriert, wobei das Venturirohr in diesem Fall den klassischen Aufbau einer Strahlpumpe aufweist. Von der Förderleitung 1 mündet eine Treibdüse in die Mischkammer 7, die eine Querschnittsverengung aufweist und stromab von dem Diffusor 8 gefolgt wird. Im Bereich der Mischkammer ist der Abzweig 3 zur Düse hin angeordnet. Stromab weist das Venturirohr am Austritt 4 ein schaltbares Absperrorgan auf, welches während des Dosierbetriebes geschlossen ist, so dass das geförderte Fluid über die Abzweigleitung 3 zur Düse hin abströmt und in den Abgastrakt des Verbrennungsmotors eingespritzt wird. Bei Beendigung der Dosierung wird das Absperrorgan am Austritt 4 des Venturirohres 2 geöffnet, so dass die Gesamtanordnung gemäß Fig. 4 wie eine Strahlpumpe arbeitet und das über die Förderleitung 1 geförderte Reduktionsmittel als Treibmedium dient und das in der Abzweigleitung befindliche Fluid als Saugmedium in die Mischkammer 7 eingesaugt wird und über den Austritt 4 abtransportiert wird.

Die Ausführungsform gemäß Fig. 4 weist den kompliziertesten Aufbau auf, es hat sich jedoch in Versuchen gezeigt, dass diese Ausführungsform auch die effektivste Variante zu einer zügigen und zuverlässigen Entleerung der Abzweigleitung 3 und der Düse bildet.

Durch die Erfindung wird somit ein Reduktionsmitteldosiersystem zur Einspritzung eines Reduktionsmittels in den Abgasstrom eines Verbrennungsmotors zur selektiven katalytischen Reduktion bereitgestellt, bei dem mittels einer besonders vorteilhaften Ausgestaltung der Förderleitung 1 durch Integration eines Venturirohres 2 und eine Änderung der Strömungsrichtung durch die Schaltung des schaltbaren Absperrorgans am Austritt 4 des Venturirohres 2 durch eine Änderung der Strömungsrichtung ein Venturieffekt erzeugt wir, der nach dem Prinzip einer Saugstrahlpumpe genutzt wird, um die Abzweigleitung 3 und die Düse zu entleeren und das in der Abzweigleitung 3 befindliche Reduktionsmittel in das Venturirohr 2 anzusaugen und über den Austritt 4 abzutransportieren. Dabei wird die zu dosierende Reduktionsmittellösung gleichzeitig als Treibmedium einer Strahlpumpe genutzt.

Besonders vorteilhaft ist dabei, dass keine Extraleitung mit Druckluft oder dergleichen zur Entleerung des Systems nötig ist. Ferner kann das in der Abzweigleitung 3 befindliche Reduktionsmittel wieder in den Tank zurückgeführt werden, ohne dass dieses ungenutzt in den Abgastrakt eingespritzt wird. Insgesamt ergibt sich eine deutlich einfachere Bauweise und deutliche Vereinfachung des gesamten Systems gegenüber dem vorbekannten Stand der Technik. Wenn der Austritt 4 des Venturirohres 2 an die Saugleitung der Pumpe angeschlossen wird, wird nach Entleerung der Abzweigleitung 3 zur Düse hin und der Sensorik auch die Pumpe teilweise belüftet, was der Frostsicherheit des gesamten Systems dient.

## Patentansprüche

1. Reduktionsmitteldosiersystem zur Einspritzung eines Reduktionsmittels in den Abgasstrom eines Verbrennungsmotors zur selektiven katalytischen Reduktion, wobei das Dosiersystem mit einem Reduktionsmitteltank verbindbar/verbunden ist, aus dem Reduktionsmittel entnommen und mittels einer Förderpumpe über eine Förderleitung (1) gefördert und über zumindest eine Düse in den Abgasstrom des Verbrennungsmotors eingeleitet wird, **dadurch gekennzeichnet, dass** in die Förderleitung (1) ein Venturirohr (2) integriert ist, welches einen Abzweig (3) aufweist, der in die Düse mündet, wobei am Austritt (4) des Venturirohres (2) ein öffenbares Absperrorgan angeordnet ist, sodass bei geöffnetem Absperrorgan das in der Düse und dem Abzweig (3) befindliche Reduktionsmittel als Saugmedium in das Venturirohr (2) angesaugt und über den Austritt (4) abtransportiert wird.

2. Dosiersystem nach Anspruch 1, **dadurch gekennzeichnet, dass** der Abzweig (3) im Bereich einer Verjüngung (5) des Venturirohres (2) angeordnet ist.

3. Dosiersystem nach Anspruch 1 oder 2, **dadurch gekennzeichnet, dass** der Abzweig (3) beabstandet zu einem oder unmittelbar vor einer Querschnittserweiterung (6) des Venturirohres (2) angeordnet ist.

4. Dosiersystem nach einem der vorherigen Ansprüche, **dadurch gekennzeichnet, dass** der Abzweig (3) im Bereich einer in das Venturirohr (2) mündenden Treibdüse der Förderleitung (1) angeordnet ist.

5. Dosiersystem nach einem der vorherigen Ansprüche, **dadurch gekennzeichnet, dass** stromab des Abzweigs (3) eine Querschnittsverengung (7) gefolgt von einem Diffusor (8) angeordnet ist.

6. Dosiersystem nach einem der vorherigen Ansprüche, **dadurch gekennzeichnet, dass** der Abzweig (3) senkrecht auf dem Venturirohr (2) steht oder dass der Abzweig (3) und das Venturirohr (2) einen spitzen Winkel (α) einschließen.

7. Dosiersystem nach einem der vorherigen Ansprüche, **dadurch gekennzeichnet, dass** der Innendurchmesser des Venturirohres (2) im Bereich des Abzweigs (3) und/oder der Innendurchmesser des Abzweigs (3) am Venturirohr (2) gleich oder kleiner als 5 mm, insbesondere gleich oder kleiner als 4 mm, insbesondere gleich oder kleiner als 3 mm, insbesondere gleich oder kleiner als 2 mm, insbesondere gleich oder kleiner als 1 mm, insbesondere gleich oder kleiner als 0,8 mm ist.

8. Dosiersystem nach einem der vorherigen Ansprüche, **dadurch gekennzeichnet, dass** eine Druckluftversorgung besteht und das Reduktionsmittel innerhalb oder außerhalb der Düse mittels Druckluft zerstäubt wird, insbesondere dass die Druckluftversorgung ein Schaltventil und/oder ein Druckregelventil aufweist.

9. Dosiersystem nach einem der vorherigen Ansprüche, **dadurch gekennzeichnet, dass** es sich bei der Förderpumpe um eine Membranpumpe oder eine Kolbenpumpe oder eine Kreiselpumpe oder eine Orbitalpumpe oder eine Zahnradpumpe handelt.

10. Verfahren zum Betrieb eines Reduktionsmitteldosiersystems zur Einspritzung eines Reduktionsmittels in den Abgasstrom eines Verbrennungsmotors zur selektiven katalytischen Reduktion, wobei das Dosiersystem mit einem Reduktionsmitteltank verbunden ist, aus dem Reduktionsmittel entnommen und mittels einer Förderpumpe über eine Förderleitung (1) gefördert und über zumindest eine Düse in den Abgasstrom des Verbrennungsmotors eingeleitet wird, **dadurch gekennzeichnet, dass** in die Förderleitung (1) ein Venturirohr (2) integriert ist, welches einen Abzweig (3) aufweist, der in die Düse mündet, wobei am Austritt (4) des Venturirohres (2) ein öffenbares Absperrorgan angeordnet ist, welches während des Dosierbetriebes geschlossen ist und bei Beendigung der Dosierung geöffnet wird, sodass bei geöffnetem Absperrorgan das in der Düse und dem Abzweig (3) befindliche Reduktionsmittel als Saugmedium in das Venturirohr (2) angesaugt und über den Austritt (4) abtransportiert wird.

## Claims

1. Reducing agent metering system for injecting a reducing agent into the exhaust gas flow of an internal combustion engine for selective catalytic reduction, the metering system being connected/connectable to a reducing agent tank from which reducing agent is taken and delivered by means of a delivery pump via a delivery line (1) and is introduced into the exhaust gas flow of the internal combustion engine via at least one nozzle, **characterised in that** a Venturi tube (2) is integrated into the delivery line (1) and has a branch (3) which discharges into the nozzle, an openable shutoff element being arranged at the outlet (4) of the Venturi tube (2) so that, when the shutoff element is opened, the reducing agent which is located in the nozzle and the branch (3) is taken up as a suction medium into the Venturi tube (2) and is carried away via the outlet (4).

2. Metering system according to claim 1, **characterised in that** the branch (3) is arranged in the region of a narrowing (5) of the Venturi tube (2).

3. Metering system according to either claim 1 or claim 2, **characterised in that** the branch (3) is arranged so as to be at a distance from or directly in front of a cross sectional widening (6) of the Venturi tube (2).

4. Metering system according to any of the preceding claims, **characterised in that** the branch (3) is arranged in the region of a drive nozzle of the delivery line (1), which nozzle discharges into the Venturi tube (2).

5. Metering system according to any of the preceding claims, **characterised in that** a cross sectional narrowing (7) followed by a diffusor (8) is arranged downstream of the branch (3).

6. Metering system according to any of the preceding claims, **characterised in that** the branch (3) is positioned perpendicularly to the Venturi tube (2) or **in that** the branch (3) and the Venturi tube (2) enclose an acute angle (α).

7. Metering system according to any of the preceding claims, **characterised in that** the internal diameter of the Venturi tube (2) in the region of the branch (3) and/or the internal diameter of the branch (3) on the Venturi tube (2) is less than or equal to 5 mm, in particular less than or equal to 4 mm, in particular less than or equal to 3 mm, in particular less than or equal to 2 mm, in particular less than or equal to 1 mm, in particular less than or equal to 0.8 mm.

8. Metering system according to any of the preceding claims, **characterised in that** there is a compressed air supply and the reducing agent is atomized inside or outside the nozzle by means of compressed air, in particular **in that** the compressed air supply has a switching valve and/or a pressure control valve.

9. Metering system according to any of the preceding claims, **characterised in that** the delivery pump is a membrane pump or a piston pump or a centrifugal pump or an orbital pump or a geared pump.

10. Method for operating a reducing agent metering system for injecting a reducing agent into the exhaust gas flow of an internal combustion engine for selective catalytic reduction, the metering system being connected to a reducing agent tank from which reducing agent is taken and delivered by means of a delivery pump via a delivery line (1) and is introduced into the exhaust gas flow of the internal combustion engine via at least one nozzle, **characterised in that** a Venturi tube (2) is integrated into the delivery line (1), which Venturi tube has a branch (3) which discharges into the nozzle, an openable shutoff element being arranged at the outlet (4) of the Venturi tube (2), which element is closed in the metering mode and is opened when metering is completed so that, when the shutoff element is opened, the reducing agent which is located in the nozzle and the branch (3) is taken up as a suction medium into the Venturi tube (2) and is carried away via the outlet (4).

## Revendications

1. Système de dosage d'agent de réduction pour injecter un agent de réduction dans le courant de gaz d'échappement d'un moteur à combustion interne pour la réduction catalytique sélective, dans lequel le système de dosage peut être ou est relié à un réservoir d'agent de réduction, d'où l'agent de réduction est prélevé et est acheminé au moyen d'une pompe d'alimentation via une conduite d'alimentation (1) et via au moins une buse dans le courant de gaz d'échappement du moteur à combustion interne, **caractérisé en ce qu'**est intégré à la conduite d'alimentation (1) un tube de Venturi (2), qui présente une dérivation (3) qui débouche dans la buse, dans lequel est aménagé à la sortie (4) du tube de Venturi (2) un organe d'arrêt ouvrable de sorte que, lorsque l'organe d'arrêt est ouvert, l'agent de réduction se trouvant dans la buse et la dérivation (3) soit aspiré comme milieu d'aspiration dans le tube de Venturi (2) et soit évacué via la sortie (4).

2. Système de dosage selon la revendication 1, **caractérisé en ce que** la dérivation (3) est située dans la zone d'un rétrécissement (5) du tube de Venturi (2).

3. Système de dosage selon la revendication 1 ou la revendication 2, **caractérisé en ce que** la dérivation (3) est située à distance d'un élargissement en coupe transversale (6) du tube de Venturi (2) ou directement avant celui-ci.

4. Système de dosage selon l'une quelconque des revendications précédentes, **caractérisé en ce que** la dérivation (3) est située dans la zone d'une buse motrice de la conduite d'alimentation (1) débouchant dans le tube de Venturi (2).

5. Système de dosage selon l'une quelconque des revendications précédentes, **caractérisé en ce qu'**est aménagé en aval de la dérivation (3) un étranglement en section transversale (7) suivi d'un diffuseur (8).

6. Système de dosage selon l'une quelconque des revendications précédentes, **caractérisé en ce que** la dérivation (3) est verticale sur le tube de Venturi (2) ou la dérivation (3) et le tube de Venturi (2) font un angle aigu (α).

7. Système de dosage selon l'une quelconque des revendications précédentes, **caractérisé en ce que** le diamètre interne du tube de Venturi (2) dans la zone de la dérivation (3) et/ou le diamètre interne de la dérivation (3) sur le tube de Venturi (2) est ou sont égaux ou supérieurs à 5 mm, en particulier égaux ou supérieurs à 4 mm, en particulier égaux ou supérieurs à 3 mm, en particulier égaux ou supérieurs à 2 mm, en particulier égaux ou supérieurs à 1 mm, en particulier égaux ou supérieurs à 0,8 mm.

8. Système de dosage selon l'une quelconque des revendications précédentes, **caractérisé en ce qu'**il y a une source d'air comprimé et l'agent de réduction est pulvérisé à l'intérieur ou à l'extérieur de la buse au moyen d'air comprimé, en particulier **en ce que** la source d'air comprimé présente une soupape de commande et/ou un clapet de réglage de pression.

9. Système de dosage selon l'une quelconque des revendications précédentes, **caractérisé en ce que** la pompe d'alimentation est une pompe à membrane ou une pompe à piston ou une pompe centrifuge ou une pompe orbitale ou une pompe à engrenages.

10. Procédé d'exploitation d'un système de dosage d'agent de réduction pour injecter un agent de réduction dans le courant de gaz d'échappement d'un moteur à combustion interne pour la réduction catalytique sélective, dans lequel le système de dosage est relié à un réservoir d'agent de réduction, d'où de l'agent de réduction est prélevé et est acheminé au moyen d'une pompe d'alimentation via une conduite d'alimentation (1) et via au moins une buse dans le courant de gaz d'échappement du moteur à combustion interne, **caractérisé en ce qu'**est intégré à la conduite d'alimentation (1) un tube de Venturi (2), qui présente une dérivation (3) qui débouche dans la buse, dans lequel est aménagé à la sortie (4) du tube de Venturi (2) un organe d'arrêt ouvrable qui est fermé pendant l'opération de dosage et est ouvert à l'achèvement du dosage de sorte que, lorsque l'organe d'arrêt est ouvert, l'agent de réduction se trouvant dans la buse et la dérivation (3) soit aspiré comme milieu d'aspiration dans le tube de Venturi (2) et soit évacué via la sortie (4).
